# EUROPÄISCHE PATENTSCHRIFT

(11) **EP 0 270 035 B1**
(45) Veröffentlichungstag und Bekanntmachung des Hinweises auf die Patenterteilung: **24.02.1993**
(21) Anmeldenummer: 87117611.1
(22) Anmeldetag: 27.11.1987
(51) Int. Cl.: B60N 2/26

(54) **Kinder-Sicherheitssitz**
Child's safety seat
Siège de sécurité pour enfant

(30) Priorität: 28.11.1986 DE 8631874 U
(43) Veröffentlichungstag der Anmeldung: 08.06.1988
(73) Patentinhaber: Storchenmühle Kinderausstattungen GmbH & Co Textil- und Hartwaren Kommanditgesellschaft, D-51503 Rösrath (DE)
(72) Erfinder: Schraeder Margarete, D-8654 Marktleugast (DE)
(74) Vertreter: Tergau, Enno, Dipl.-Ing.

(56) Entgegenhaltungen:
- FR-A- 2 266 616
- FR-A- 2 565 534
- FR-A- 2 596 338
- GB-A- 2 072 489
- US-A- 4 215 900

## Beschreibung

Die Erfindung betrifft einen Kinder-Sicherheitssitz zum Einsatz in Fahrzeugen mit den im Oberbegriff des Anspruches 1 angegebenen Merkmalen.

Derartige Kindersitze (siehe z.B. US-A-37 67 259) weisen in der Regel ein rahmenartiges, von einem Fahrzeug- oder einem speziellen, beispielsweise mit den Anlenkpunkten eines Fahrzeuggurtes verbindbaren Befestigungsgurt fixiertes Untergestell zur Positionierung des Sitzes auf einem Fahrzeugsitz in Fahrtrichtung auf. An einem Obergestell ist eine Sitzschale befestigt, in der das Kind durch sitzeigene Gurte gehalten ist. Diese Haltegurte sind an der Sitzschale bzw. dem Obergestell endseitig fixiert. Das Obergestell selbst ist vorzugsweise neigungsverstellbar am Untergestell gelagert, gegebenenfalls kann durch eine spezielle Ausgestaltung der Sitzschale das Obergestell entfallen. Dann müssen die üblichen Verbindungs- und Stellelemente in der Sitzschale selbst integriert sein.

In erster Linie dienen derartige Kinder-Sicherheitssitze dem Schutz des Kindes bei einem Unfall. Für einen bestmöglichen Unfallschutz existieren zwei wesentliche Sicherheitskriterien. Das eine ist der maximale spezifische Druck, welcher vom Gurtsystem des Sitzes sowohl horizontal als auch vertikal auf den Körper des Kindes ausgeübt wird. Dieser Druck wird in der Regel durch die Angabe der auf das Kind wirkenden Verzögerung, ausgedrückt mit dem sogenannten g-Wert, angegeben. Der g-Wert ist also ein Maß für die Qualität dieses Kriteriums.

Das zweite Kriterium ist die Vorverlagerung des Kindersitzes im Unglücksfall. Beispielsweise bei einem Frontalaufprall des Fahrzeuges wird der Sicherheitssitz aus seiner Aufstellposition auf den Rücksitzen nach vorne aus den Polstern gehoben. Diese Vorverlagerung darf ein Maximalmaß nicht überschreiten, um eine Kollision des Kindes mit dem sich davor befindlichen Frontfahrzeugsitz zu vermeiden. Bei Kindersitzen der Klasse 1 - also für Kinder mit einem Gewicht von 9 bis 18 Kilogramm - beträgt diese maximale Vorverlagerung 550 mm.

Bei herkömmlichen Kindersitzen der eingangs genannten Art wird bei einem Unfall das Kind in den Haltegurt des Sitzes geschleudert, wo es nach überwinden des naturgemäß zwischen dem Gurt und dem Kind vorhandenen, kleinen Spiels nach der Spannung der Gurte ruckartig aufgefangen wird. Die kinetische Energie des Kindes wird anschließend durch eine kontrollierte Dehnung der Haltegurte des Kindersitzes und dessen Vorverlagerung im Ganzen verzehrt. Dabei treten hohe Verzögerungen - hohe g-Werte also - auf.

Aus dem Fahrzeugbau ist es bekannt, die auf Fahrzeugsitze bei einem Aufprall einwirkende kinematische Energie mittels eines plastisch-irreversibel verformbaren Deformationskörpers abzubauen. Aus DE-A-29 26 893 ist ein Deformationskörper bekannt, der im Bereich der Gurtaufwickelspindel des Fahrzeugsicherheitsgurtes angeordnet ist. Aus US-A-37 34 562 ist ein mit dem Sitzgestell des Fahrzeugsitzes funktionsmäßig verbundenes, plastisch-irreversibel verformbares Deformationselement bekannt. Nachteilig bei beiden Deformationselementen ist die Tatsache, daß sie aufgrund der Irreversibilität ihrer Verformung nur einmal einsetzbar sind. Nach einem Aufprall müssen sie jeweils entfernt werden und durch ein neues Deformationselement ersetzt werden.

Davon ausgehend liegt der Erfindung die Aufgabe zugrunde, einen Kinder-Sicherheitssitz so auszubilden, daß beim Unfallverlauf einerseits die auf das Kind wirkenden Kräfte möglichst niedrig gehalten werden, ohne daß andererseits die maximale Vorverlagerung überschritten wird. Diese Aufgabe ist durch die Merkmalskombination des Anspruchs 1 gelöst.

Demnach sind die Haltegurte gegenüber der Sitzschale bzw. dem Obergestell und/oder das Obergestell gegenüber dem Untergestell und/oder das Untergestell in sich durch wenigstens ein in seiner Kraftrichtung im wesentlichen gegen die Fahrtrichtung wirkendes Druckfederelement abgefedert. Das Druckfederelement erzielt einen Abbau der Kraftspitzen auf das Kind, wenn dieses während eines Aufpralls des Fahrzeuges in die Haltegurte des Kinder-Sicherheitssitzes geschleudert wird. Es tritt nämlich eine vergleichsweise weniger abrupte Verzögerung des Kindes ein, da nach dem Kraftschluß des Kindes mit den Haltegurten ein Teil der Verzögerungskräfte durch die Kompression des Druckfederelementes kompensiert wird. Zwar ist die absolut zu absorbierende kinetische Energie des Kindes unverändert, jedoch wird der zeitliche Verlauf der Absorption wesentlich günstiger gestaltet, so daß Kraftspitzen und damit verbundene, hohe g-Werte vermieden werden. Da die Fixierung des Kindersitzes am Fahrzeugsitz unverändert bleibt, wird die maximale Vorverlagerung trotzdem nicht überschritten.

Die Ansprüche 2 bis 5 geben eine erste Alternative zur Anbringung von Druckfederelementen an. Nach Anspruch 2 liegen jeweils zwischen den oberen Befestigungsschlaufen der Haltegurte an einer Querstrebe des Obergestells und dieser Querstrebe gummiartige Pufferzylinder ein. Wird das Kind nun in die Haltegurte des Sitzes geschleudert, so findet nicht sofort eine abrupte Verzögerung statt, sondern es werden gleichzeitig die Pufferzylinder komprimiert und das Kind weniger stark verzögert. Dadurch findet der beschriebene Abbau von Kraftspitzen auf das Kind statt. Der damit verbundene Abfederungseffekt bewirkt eine Absenkung des g-Wertes, womit der spezifische Flächendruck des Gurtsytems auf das Kind verringert wird. Die Abfederungsbewegung findet durch die Querstrebe des Obergestells eine Begrenzung, wodurch sichergestellt wird, daß die maximale Vorverlagerung eingehalten wird.

Die kennzeichnenden Merkmale der Ansprüche 3 und 4 geben Maßnahmen an, mit denen sowohl der Abfederungseffekt optimiert, als auch eine Montageerleichterung erzielt wird. Durch den im Pufferzylinder längsaxial exzentrisch verlaufenden, zur Mantelfläche des Zylinders hin offenen, im Querschnitt vorzugsweise runden Aufsetzkanal kann der Pufferzylinder ganz einfach auf die Querstrebe des Obergestells aufgesetzt werden. Durch die gummiartige Elastizität des Pufferzylinders ist gleichzeitig dessen sichere Fixierung an der Querstrebe gewährleistet. Da die größte Materialstärke des Pufferzylinders entgegen der Fahrtrichtung weist, ist der parallel zur Fahrtrichtung liegende Kompressionsweg maximal, wodurch der Abfederungseffekt optimiert wird. Der Formschluß zwischen den Befestigungsschlaufen und der Mantelflächen der Pufferzylinder gewährleistet einen sofortigen Eintritt des Abfederungseffektes, wenn der Kraftschluß zwischen dem Kind und den Haltegurten hergestellt ist. Dies begünstigt wiederum die Einhaltung der maximalen Vorverlagerung und die bestmögliche Verteilung der auf das Kind wirkenden Kraft über die gesamte Zeitdauer des Aufpralls.

Durch eine Ausgestaltung der Mantelfläche der Pufferzylinder gemäß Anspruch 5 wird eine zuverlässige Formschlußverbindung zwischen den Befestigungsschlaufen der Haltegurte und den Pufferzylindern erzielt. Die Befestigungsschlaufen liegen nämlich in den in Umfangsrichtung verlaufenden, flachen Vertiefungen der Pufferzylinder ein, sind also gegen seitliche Verschiebung fixiert.

Die Anbringung von Druckfederelementen im Untergestell ist in den Ansprüchen 6 und 7 angegeben. Diese ist bei Kinder-Sicherheitssitzen anwendbar, die ein Untergestell aufweisen, das zumindest aus einem in Längsrichtung L-förmigen Basisteil und mit diesem verbundenen Vertikal- und Lagerstreben für das Obergestell des Sitzes zusammengesetzt ist. Das Basisteil weist zwei seitliche, durch Querstreben verbundene L-Streben auf. An den vorderen Freienden der Horizontalschenkel der L-Streben sind nach oben abstehende Vertikalstreben angesetzt. Diese sind mit den Vertikalschenkeln der L-Streben durch die Lagerstreben verbunden, die jeweils von den oberen Enden der Vertikalstreben zum Mittenbereich der Vertikalschenkel der L-Streben verlaufen. Die Lagerstreben halten das Obergestell des Sitzes. Die Druckfederelemente sind jeweils in die Vertikalstreben des Untergestelles eingesetzt. Durch diese Konstruktion ist eine Vergrößerung des Abfederungseffekt es erzielbar, da nach Vollzug des Kraftschlusses des Kindes mit den Haltegurten des Sitzes quasi ohne zeitliche Verzögerung eine Kraftübertragung über das Obergestell auf das Untergestell erfolgt. Durch die in den Vertikalstreben angeordneten Druckfederelemente gibt das eine gewisse Eigenelastizität aufweisende Untergestell kontrolliert nach, wodurch eine abgefederte Drehbewegung des Obergestells und der Sitzschale um eine horizontale, zur Fahrtrichtung rechtwinklig angeordnete Achse erfolgt. Diese abgefederte Drehbewegung ist durch den begrenzten Federweg des Druckfederelementes ebenfalls begrenzt, wodurch die maximale Vorverlagerung nicht überschritten wird. Sie äußert sich in der Position des Kindes als ein im wesentlichen lineares, gegen die Fahrtrichtung abgefedertes Nachgeben. Analog zu den Ausführungen zu den Ansprüchen 2 bis 5 erfolgt also bei einem Aufprall ein Abbau der Kraftspitzen, wodurch die auf das Kind wirkenden Verzögerungswerte reduziert werden.

Durch das Kennzeichen des Anspruches 7 wird eine einfach zu realisierende, jedoch wirkungsvolle Ausgestaltung der Druckfederelemente in den Vertikalstreben erzielt. Die die Vertikalstreben jeweils in zwei längsaxial relativ zueinander bewegliche Teilstücke teilenden, kompressiblen Gummipuffer sind zudem einfach zu montieren.

Eine weitere vorteilhafte Ausgestaltung für ein Druckfederelement ist in den Ansprüchen 8 und 9 angegeben. Bei Kindersitzen, die zumindest ein in Längsrichtung L-förmiges Basisteil aus zwei seitlichen, durch Querstreben verbundenen L-Streben und eine das Basisteil tragenden Bodenplatte aufweisen, kann zwischen der Bodenplatte und dem Basisteil eine dieses verbindende, gummiartige, kompressible Druckfederplatte etwa horizontal angeordnet sein. Auch bei dieser Konstruktion findet beim Unfallverlauf ein Kraftschluß zwischen dem Kind über die Haltegurte des Sitzes, das Obergestell und das Untergestell mit der Druckfederplatte statt. Diese wird bei der bei einem Unfall auftretenden Verzögerung des Kindersitzes komprimiert, womit durch eine Rückwirkung über das Unter- und Obergestell sowie die Sitzschale und die das Kind haltenden Gurte ein im wesentlichen linear gerichteter Abfederungseffekt für das Kind erzielt wird. Damit werden wiederum Kraftspitzen abgebaut und bei einer im wesentlichen unveränderten Vorverlagerung die maximal auf das Kind wirkenden yerzögerungskräfte verringert.

Bei einer keilförmigen Ausbildung der Druckfederplatte mit entgegen der Fahrtrichtung abnehmender Materialstärke ist das Federelement vorteilhaft an die auftretenden Kraftrichtungen angepaßt. Bei dieser Konstruktion findet nämlich durch die Zwischenlage der Druckfederplatte eine geringfügige, jedoch für die Reduzierung der Verzögerungskräfte auf das Kind entscheidende Drehung des Kindersitzes um eine horizontale, etwa rechtwinklig zur Fahrtrichtung verlaufende Achse statt, die im wesentlichen den Bereich der hinteren Befestigungspunkte des Basisteils des Kindersitzes am Fahrzeugsitz schneidet. Auf Grund der Hebelgesetze ist die Druckfederplatte also in ihrem in Fahrtrichtung vorneliegenden Bereich einer höheren Belastung ausgesetzt als im hinten liegenden Bereich. Entsprechend ist durch die keilförmige Ausgestaltung der Vorderbereich durch eine größere Materialdicke der Platte verstärkt. Es ist darauf hinzuweisen, daß bei einer entsprechenden Auslegung der alternativen Druckfederelemente eine parallele Verwendung zweier oder gar aller drei bevorzugter Ausführungsformen denkbar ist.

Durch eine Ausgestaltung des Sitzes nach Anspruch 10 ist mit Sicherheit gewährleistet, daß die maximal zulässige Vorverlagerung des Sitzes bei einem Unfall nicht überschritten wird. Die Druckfederelemente weisen nämlich eine progressive Federcharakteristik auf, mit zunehmender Kompression bewirken sie also eine überproportional anwachsende Gegenkraft. Der Federweg der Druckfederelemente ist also begrenzt.

Die Erfindung wird in Ausführungsbeispielen anhand der beiliegenden Figuren näher erläutert. Es zeigen:
- Fig. 1: eine perspektivische Ansicht des Sitzes in einer ersten Ausführungsform,
- Fig. 2: einen schematischen Vertikalschnitt parallel zur Fahrtrichtung dieses Sitzes,
- Fig. 3: eine perspektivische Ansicht des Sitzes in einer zweiten Ausführungsform und
- Fig. 4: eine perspektivische Ansicht des Sitzes in einer dritten Ausführungsform.

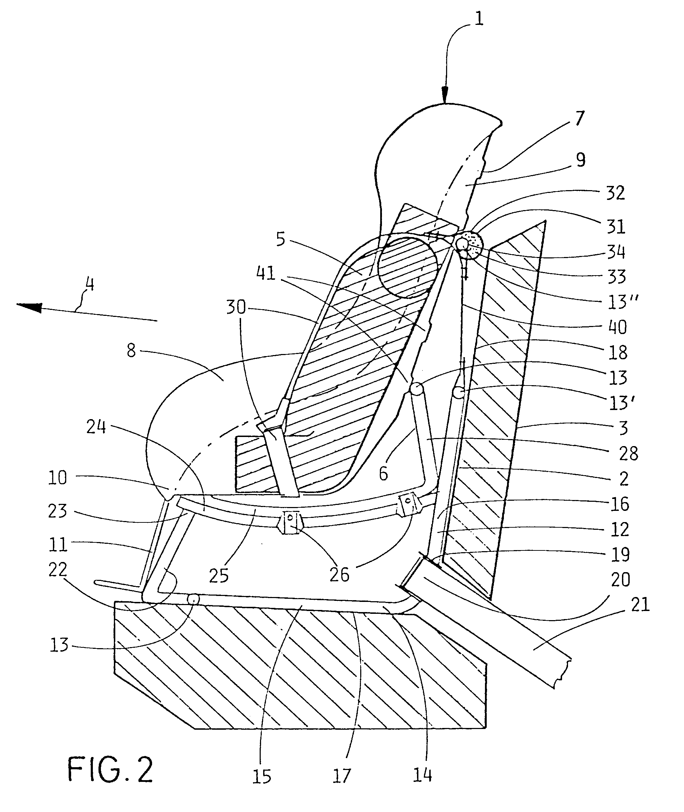

Der Kinder-Sicherheitssitz 1 besteht im wesentlichen aus einem rahmenartigen Untergestell 2 zur Positionierung des Sitzes auf dem Fahrzeugsitz 3 eines PKW mit in Fahrtrichtung 4 schauendem Kind. In Fig. 2 ist der Rumpf 5 eines sich im Sitz befindlichen Kindes als eng schraffierte Fläche angedeutet. An einem ebenfalls rahmenartigen Obergestell 6 ist eine Sitzschale 7 befestigt, die anatomisch geformt und ausgepolstert ist sowie mit beiderseitig wulstartig vorstehenden Seitenrändern 8 zum Schutz des Kindes versehen ist. Die Rückenlehne 9 ist mit Verstärkungsrippen 41 versehen und bis in Kopfhöhe hochgezogen. Sie dient damit gleichzeitig als Kopfstütze für das Kind. Am Vorderrand 10 der Sitzschale 7 schließt sich eine L-förmige, nach unten weisende Fußstütze 11 an.

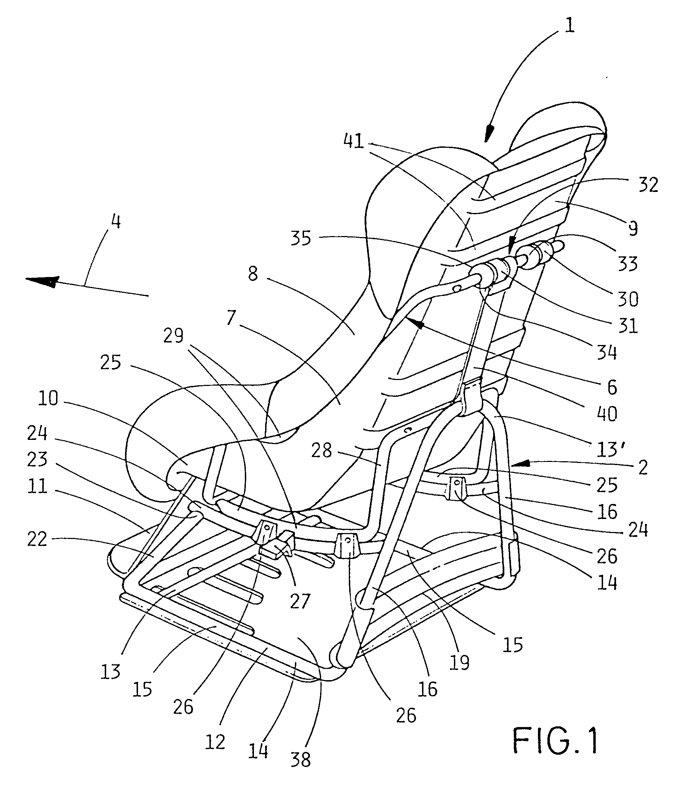

Das Untergestell 2 enthält ein in Längsrichtung L-förmiges Basisteil 12 (Fig. 2) aus zwei seitlichen, durch Querstreben 13 verbundenen L-Streben 14. Die Horizontal- 15 bzw. Vertikalschenkel 16 stützen sich an der Sitzfläche 17 bzw. Rückenlehne 18 des Fahrzeugsitzes 3 ab. Die Vertikalschenkel 16 sind quer zur Fahrtrichtung 4 aufeinanderzu geneigt, so daß für die die beiden Enden der Vertikalschenkel 16 verbindende obere Querstrebe 13' ein kurzes Bogenstück genügt. Im Winkelbereich zwischen den beiden Schenkeln 15,16 verläuft quer zur Fahrtrichtung 4 zwischen den beiden L-Streben 14 eine Führungsschiene 19 (Fig. 1,3 und 4), in der in Einbaustellung des Sitzes 1 der Beckenteil 20 des Fahrzeuggurtes 21 verläuft. Damit ist der Sicherheitssitz 1 am Fahrzeugsitz fixiert.

Jeweils an den vorderen Freienden der Horizontalschenkel 15 der L-Streben 14 sind nach oben abstehende Vertikalstreben 22 vorgesehen, die leicht nach hinten geneigt angeordnet sind. An die oberen Enden 23 der Vertikalstreben 22 sind die Lagerstreben 24 angesetzt, die diese Enden 23 mit dem Mittenbereich der Vertikalschenkel 16 der L-Streben 14 verbinden. Die Lagerstreben sind kreisbogenförmig ausgebildet und dienen zur Halterung des Obergestells 6 des Sicherheitssitzes 1. Die sich auf den Lagerstreben 24 abstützenden Gegenlagerstreben 25 sind ebenfalls kreisbahnförmig ausgebildet und liegen im wesentlichen auf ihrer gesamten Länge an den Lagerstreben 24 an. Sie weisen seitlich angesetzte, die Lagerstreben 24 umgreifende Führungsnasen 26 auf und sind über eine Rasthebelvorrichtung 27 in verschiedenen Neigungsstellungen gegenüber dem Untergestell 2 fixierbar. Die Gegenlagerstreben 25 setzen sich in einem Halterahmen 28 fort, der aus sich entlang der Außenseite der Sitzschale 7 erstreckenden Längsstreben 29 und Querstreben 13 zusammengesetzt ist. Der Sicherheitssitz 1 weist ein eigenes Gurtsystem für das Kind auf, das hosenträgerartig ausgebildet ist und dessen obere Haltegurte 30 die Sitzschale 7 im Kopfbereich durchgreifen und durch Befestigungsschlaufen 31 an der oberen Querstrebe 13" des Halterahmens 28 fixiert sind.

Im folgenden werden die verschiedenen Ausführungsformen für das Druckfederelement 32 zur Abfederung des Kindes bei einem Aufprall beschrieben. Gemäß den Fig. 1,2 und 4 liegen zwischen den Befestigungsschlaufen 31 der Haltegurte 30 und der oberen Querstrebe 13" des Halterahmens 28 gummiartige Pufferzylinder 33 ein. Diese weisen einen längsaxial, exzentrisch verlaufenden, zur Mantelfläche des Zylinders 33 hin offenen, im Querschnitt vorzugsweise runden Aufsetzkanal 34 auf. Damit sind die Pufferzylinder 33 haftschlüssig auf die obere Querstrebe 13" des Obergestells 6 aufgesetzt. Die größte Materialstärke der Pufferzylinder 33 weist entgegen der Fahrtrichtung 4. Die Befestigungsschlaufen 31 umgreifen deren Mantelflächen formschlüssig. Bei einem Aufprall des Fahrzeuges wirkt durch das Kind auf die Haltegurte 30 des Sicherheitssitzes 1 eine in Fahrtrichtung 4 weisende Kraft. Diese wird über die Haltegurte 30 auf die Pufferzylinder 33 übertragen, wodurch diese komprimiert werden und sich der beschriebene Abfederungseffekt ergibt. Ein seitliches Abrutschen der Befestigungsschlaufen 31 wird durch eine in Umfangsrichtung in den Mantelflächen der Pufferzylinder 33 verlaufende, flache Vertiefung 35 verhindert, in der die Haltegurte 30 mit ihrer Breite einliegen.

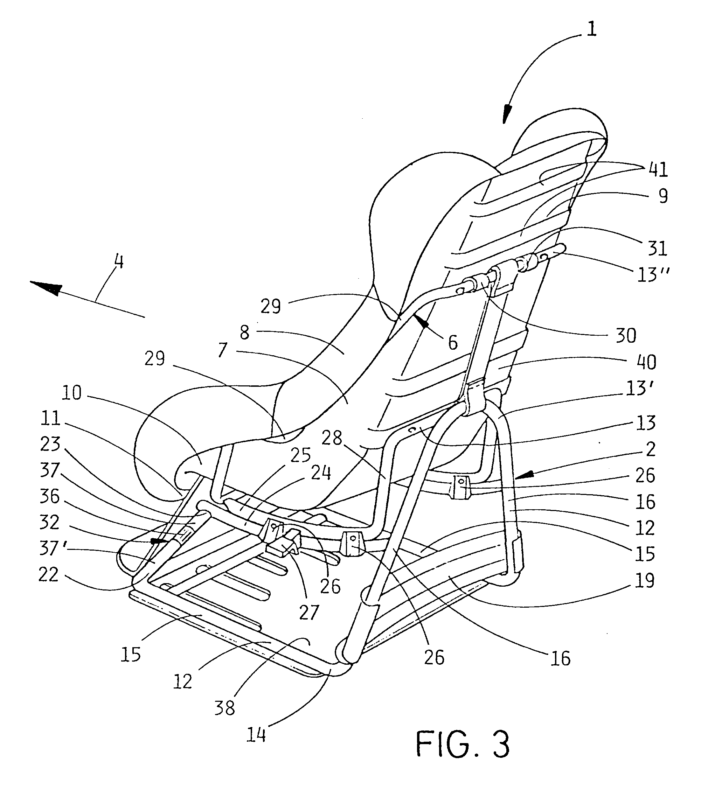

Bei der Ausführungsform gemäß Fig. 3 sind als Druckfederelement 32 in die Vertikalstreben 22 des Untergestells 2 kompressible Gummipuffer 36 eingesetzt. Diese teilen die Vertikalstreben 22 in jeweils zwei längsaxial relativ zueinander bewegliche Teilstücke 37, 37'. Bei einem Aufprall des Fahrzeuges wird die in Fahrtrichtung 4 wirkende Kraft über die Haltegurte 30 auf das Obergestell 6 und weiter auf das Untergestell 2 übertragen. Letzteres ist durch die Gummipuffer 36 in sich elastisch, über eine durch die Gummipuffer 36 abgefederte Drehbewegung des Untergestells 2 in sich wird wiederum der beschriebene Abfederungseffekt für das Kind erzielt.

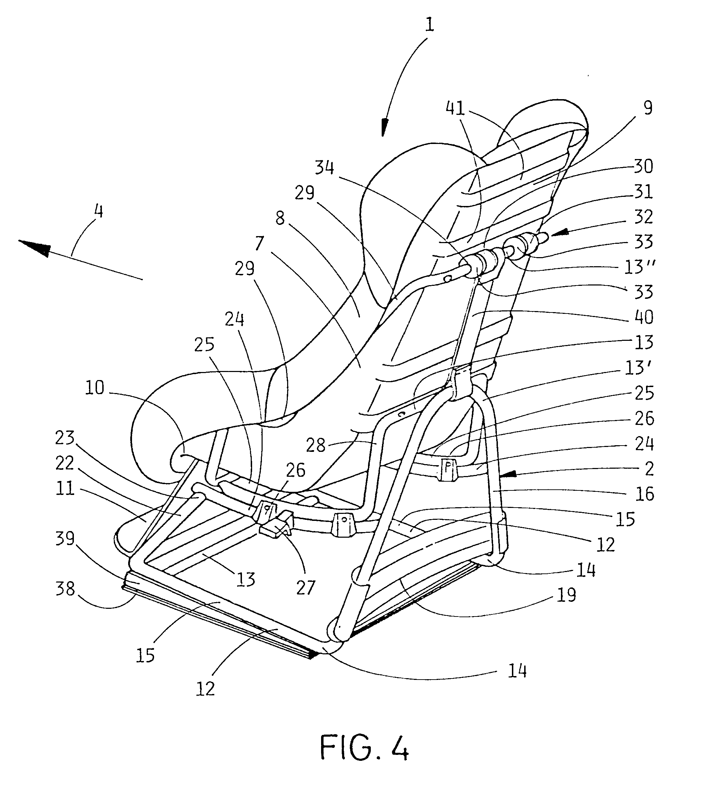

Die auf das Kind einwirkenden Verzögerungswerte werden auf die gleiche Weise beim Ausführungsbeispiel gemäß Fig. 4 reduziert. Dort ist zwischen der das Untergestell 2 tragenden Bodenplatte 38 und dem Basisteil 12 des Untergestells 2 eine diese beiden Bauteile verbindende, gummiartige, kompressible Druckfederplatte 39 eingebaut. Diese ist etwa horizontal angeordnet und keilförmig mit entgegen der Fahrtrichtung 4 abnehmender Materialstärke ausgebildet. Auch hier kann das Untergestell eine abgefederte Drehbewegung ausführen.

Es ist darauf hinzuweisen, daß die Druckfederelemente 32 eine progressive Federcharakteristik aufweisen.

Zur Begrenzung der maximalen Vorverlagerung, zur Stabilisierung der Verbindung zwischen Obergestell 6 und Untergestell 2 im Unglücksfall und zur Beanschlagung der Neigungsverstellbewegung der Sitzschale 7 ist zwischen den Querstreben 13" und 13' des Ober- 6 bzw. Untergestells 2 ein Verbindungsgurt 40 eingesetzt. In der aufrechten Vertikalstellung der Sitzschale 7 ist dieser gespannt.

## Patentansprüche

1. Kinder-Sicherheitssitz (1) zum Einsatz in Fahrzeugen mit
- einem rahmenartigen, von einem Fahrzeug-(21) oder speziellen Befestigungsgurt fixierten Untergestell zur Positionierung des Sitzes (1) auf einem Fahrzeugsitz (2) in Fahrtrichtung (4) und
- einer an einem Obergestell (6) befestigten Sitzschale (7) mit an dieser oder am Obergestell (6) endseitig fixierten Haltegurten (30) für das Kind,
dadurch gekennzeichnet, daß
- die Haltegurte (30) gegenüber der Sitzschale (7) bzw. dem Obergestell (6) durch mindestens ein in seiner Kraftrichtung im wesentlichen gegen die Fahrtrichtung (4) wirkendes Druckfederelement (32) und
- das Untergestell (2) durch in seine vorderen Vertikalstreben (16) eingesetzte Druckfederelemente (32) in sich
abgefedert sind.

2. Sitz nach Anspruch 1,
dadurch gekennzeichnet,
daß jeweils zwischen den oberen Befestigungsschlaufen (31) der Haltegurte (30) an einer Querstrebe (13") des Obergestells (6) und dieser Querstrebe (13") gummiartige Pufferzylinder (33) einliegen.

3. Sitz nach Anspruch 2,
dadurch gekennzeichnet,
daß jeder Pufferzylinder (33) einen längsaxial exzentrisch verlaufenden, zur Mantelfläche des Zylinders hin offenen, im Querschnitt vorzugsweise runden Aufsetzkanal (34) zum Aufsetzen des Pufferzylinders (33) auf die Querstrebe (13") des Obergestells (6) aufweist.

4. Sitz nach Anspruch 3,
dadurch gekennzeichnet,
daß die Pufferzylinder (33) mit ihrer größten Materialstärke entgegen der Fahrtrichtung (4) weisend an der Querstrebe (13") angeordnet sind und die Befestigungsschlaufen (31) jeweils formschlüssig um deren Mantelflächen herumgelegt sind.

5. Sitz nach einem der Ansprüche 2 bis 4,
dadurch gekennzeichnet,
daß in die Mantelflächen der Pufferzylinder (33) in Umfangsrichtung verlaufende, flache Vertiefungen (35) von der Breite der Haltegurte (30) eingeformt sind.

6. Sitz nach einem der vorgenannten Ansprüche mit einem Untergestell (2), das zumindest
- aus einem in Längsrichtung L-förmigen Basisteil (12) aus zwei seitlichen, durch Querstreben (13) verbundenen L-Streben (14),
- zwei vorderen, jeweils an den vorderen Freienden der Horizontalschenkel (15) der L-Streben (14) nach oben abstehenden Vertikalstreben (22)
und
- zwei seitlichen, jeweils die oberen Enden (23) der Vertikalstreben (22) mit dem Mittenbereich der Vertikalschenkel (16) der L-Streben (14) verbindenden Lagerstreben (24) für das Obergestell (6) des Sitzes (1) zusammengesetzt ist,
dadurch gekennzeichnet,
daß in die Vertikalstreben (16) des Untergestells (2) jeweils ein Druckfederelement (32) eingesetzt ist.

7. Sitz nach Anspruch 6,
dadurch gekennzeichnet,
daß das Druckfederelement (32) aus einem stabähnlichen, die Vertikalstreben (16) jeweils in zwei längsaxial relativ zueinander bewegliche Teilstücke (37,37') teilenden, kompressiblen Gummipuffer (36) besteht.

8. Sitz nach einem der vorgenannten Ansprüche mit einem Untergestell (2), das zumindest
- aus einem in Längsrichtung L-förmigen Basisteil (12) aus zwei seitlichen, durch Querstreben (13) verbundenen L-Streben (14) und
- einer das Untergestell (2) tragenden Bodenplatte (38) zusammengesetzt ist,
dadurch gekennzeichnet,
daß zwischen Bodenplatte (38) und Basisteil (12) eine diese verbindende, gummiartige, kompressible Druckfederplatte (39) etwa horizontal angeordnet ist.

9. Sitz nach Anspruch 8,
dadurch gekennzeichnet,
daß die Druckfederplatte (39) keilförmig mit entgegen der Fahrtrichtung (4) abnehmender Materialstärke ausgebildet ist.

10. Sitz nach einem der vorgenannten Ansprüche,
dadurch gekennzeichnet,
daß die Druckfederelemente (32) eine progressive Federcharakteristik aufweisen.

## Claims

1. A child's safety seat (1) for use in vehicle with
- a frame-type base fixed by a vehicle belt (21) or a special fastening bolt for positioning the seat (1) on a vehicle seat (2) in the direction of travel (4) and
- a seat shell (7) secured on an upper frame (6), with retaining belts (30) for the child fixed at their ends on the shell or on the upper frame (6),
characterized in that
there are inherently spring-mounted :
- the retaining bolts (30) relative to the seat shell (7) or the upper frame (6) by at least one compression spring element (32) acting in its direction of force substantially against the direction of travel (4) and
- the base (2) by compression spring elements (32) inserted into its vertical front struts (16).

2. A seat according to claim 1,
characterized in that
rubber-type cushioning cylinders (33) are inserted respectively between the upper loops (31) fastening the retaining bolts (30) on a transverse strut (13") of the upper frame (6) and this transverse strut (13").

3. A seat according to claim 2,
characterized in that
each cushioning cylinder (33) has a fitting channel (34) eccentrically extending in the longitudinal direction, being open towards the circumferential surface of the cylinder and preferably round in cross-section, for fitting the cushioning cylinder (33) on the transverse strut (13") of the upper frame (6).

4. A seat according to claim 3,
characterized in that
the cushioning cylinders (33) are arranged on the transverse strut (13"), with their greatest material thickness pointing against the direction of travel (4) and the fastening loops (31) are respectively laid round their circumferential surfaces with a form fit.

5. A seat according to one of claims 2 to 4,
characterized in that
in the circumferential surfaces of the cushioning cylinders (33), there are formed flat recesses (35) extending in the circumferential direction, with the width of the retaining belts (30).

6. A seat according to one of the above mentioned claims with a base (2) that is composed of at least
- one base part (12), L-shaped in the longitudinal direction and consisting of two lateral L-struts (14) connected by transverse struts (13),
- two vertical front struts (22) each projecting upwards at the free front ends of the horizontal arms (15) of the L-struts (14),
- two lateral mounting struts (24) for the upper frame (6) of the seat (1), respectively connecting the upper ends (23) of the vertical struts (22) to the median zone of the vertical arms (16) of the L-struts (14),
characterized in that
one compression spring element (32) each is inserted into the vertical struts (16) of the base (2).

7. A seat according to claim 6,
characterized in that
the compression spring element (32) consists of a rod-type compressible shock absorbing rubber member (36) dividing the vertical struts (16) respectively into two part components (37, 37') that are movable in the longitudinal axial direction with respect to each other.

8. A seat according to one of the above mentioned claims with a base (2) that is composed of at least
- one base part (12), L-shaped in the longitudinal direction and consisting of two lateral L-struts (14) connected by transverse struts (13), and
- a base plate (38) carrying the base (2),
characterized in that
between the base plate (38) and the base part (12) there is arranged approximately horizontally and connecting them, a compressible rubber-type resilient compression slab (39).

9. A seat according to claim 8,
characterized in that
the resilient compression slab (39) is designed to be wedge-shaped, with its material thickness reducing against the direction of travel (4).

10. A seat according to one of the above mentioned claims,
characterized in that
the compression spring elements (32) have a progressive spring characteristic.

## Revendications

1. Siège de sécurité pour enfant (1) destiné à être utilisé dans des véhicules automobiles, comportant :
- un support inférieur en forme de cadre, fixé par une ceinture de fixation du véhicule automobile (21) ou par une ceinture de fixation spéciale et destiné au positionnement du siège (1) sur un siège de véhicule automobile (2) dans le sens de la marche (4), et
- une coquille de siège (7) fixée sur un support supérieur (6) et comportant des ceintures de maintien (30) pour l'enfant qui sont fixées aux extrémités sur celle-ci ou sur le support supérieur (6),
caractérisé en ce que
- les ceintures de maintien (30) sont montées de manière élastique par rapport à la coquille de siège (7) ou au support supérieur (6) par au moins un élément formant ressort de pression (32) dont la force est de sens sensiblement opposé au sens de la marche (4) et
- le support inférieur (2) est monté de manière élastique en soi par des éléments formant ressorts de pression (32) disposés dans ses montants verticaux antérieurs (16).

2. Siège selon la revendication 1, caractérisé en ce que des cylindres amortisseurs (33) de type caoutchouc sont situés entre les boucles de fixation supérieures (31) des ceintures de maintien (30) au niveau d'un montant transversal (13") du support supérieur (6) et ce montant transversal (13").

3. Siège selon la revendication 2, caractérisé en ce que chaque cylindre amortisseur (33) comporte un canal de montage (34) de section droite de préférence ronde, ouvert en direction de la surface périphérique du cylindre et qui s'étend de manière excentrée par rapport à l'axe longitudinal, destiné au montage du cylindre amortisseur (33) sur le montant transversal (13") du support supérieur (6).

4. Siège selon la revendication 3, caractérisé en ce que les cylindres amortisseurs (33) sont disposés sur le montant transversal (13") de manière que leur plus grande épaisseur de matière soit opposée au sens de la marche (4) et en ce que les boucles de fixation (31) entourent chacune par assemblage de forme leurs surfaces périphériques.

5. Siège selon l'une des revendications 2 à 4, caractérisé en ce que des évidements plats (35) de la largeur des ceintures de maintien (30), qui s'étendent dans la direction périphérique, sont prévus dans les surfaces périphériques des cylindres amortisseurs (33).

6. Siège selon l'une des revendications précédentes, comportant un support inférieur (2) qui est constitué par au moins
- une partie de base (12) en forme de L dans la direction longitudinale formée par deux montants en L (14) reliés par des montants transversaux (13),
- deux montant verticaux (22) antérieurs, qui s'étendent chacun vers le haut au niveau des extrémités libres antérieures de la branche horizontale (15) des montants en L (14),
et
- deux montants de support (24) latéraux, pour le support supérieur (6) du siège (1), qui relient les extrémités supérieures (23) des montants verticaux (22) au domaine médian de la branche verticale (16) des montants en L (14),
caractérisé en ce qu'un élément formant ressort de pression (32) est inséré dans les montants verticaux (16) du support inférieur (2).

7. Siège selon la revendication 6, caractérisé en ce que l'élément formant ressort de pression (32) consiste en un amortisseur en caoutchouc (36) en forme de barre, compressible, qui divise les montants verticaux (16) en deux parties (37,37') mobiles l'une par rapport à l'autre suivant l'axe longitudinal.

8. Siège selon l'une des revendications précédentes, comportant un support inférieur (2) qui est constitué au moins par
- une partie de base (12) en forme de L dans la direction longitudinale, consistant en deux montants en L (14) latéraux, reliés par des montants transversaux (13), et
- une plaque de fond (38) qui porte le support inférieur (2),
caractérisé en ce qu'il est prévu en position sensiblement horizontale entre la plaque de fond (38) et la partie de base (12) une plaque formant ressort de pression (39) compressible, de type caoutchouc, qui relie celles-ci.

9. Siège selon la revendication 8, caractérisé en ce que la plaque formant ressort de pression (39) est en forme de coin et voit l'épaisseur de sa matière décroître en sens opposé au sens de la marche (4).

10. Siège selon l'une des revendications précédentes, caractérisé en ce que les éléments formant ressorts de pression (32) comportent une caractéristique d'élasticité progressive.
